# EUROPEAN PATENT SPECIFICATION

(11) **EP 2 201 481 B1**
(45) Date of publication and mention of the grant of the patent: **22.02.2012**
(21) Application number: 08737887.3
(22) Date of filing: 16.04.2008
(51) Int. Cl.: G06F 17/30

(54) **DYNAMIC MEDIA PROXIES BASED ON USAGE PATTERNS**
DYNAMISCHE MEDIEN-PROXIES AUF DER BASIS VON BENUTZUNGSMUSTERN
MANDATAIRES DE MEDIAS DYNAMIQUES BASES SUR DES MODELES D'UTILISATION

(30) Priority: 18.10.2007 US 874262
(43) Date of publication of application: 30.06.2010
(73) Proprietor: Sony Ericsson Mobile Communications AB, 221 88 Lund (SE)
(72) Inventor: LESSING, Simon, S-221 56 Malmö (SE)
(74) Representative: VALEA AB
(86) International application number: PCT/IB2008/051465
(87) International publication number: WO 2009/050603

(56) References cited:
- YASUDA Y ET AL: "IMAGE DATABASE SYSTEM FEATURING GRACEFUL OBLIVION" IEICE TRANSACTIONS ON COMMUNICATIONS, COMMUNICATIONS SOCIETY, TOKYO, JP, vol. E79-B, no. 8, 1 August 1996 (1996-08-01), pages 1015-1022, XP000628638 ISSN: 0916-8516
- ZHOU SU ET AL: "Integrated pre-fetching and replacing algorithm for graceful image caching" IEICE TRANSACTIONS ON COMMUNICATIONS, COMMUNICATIONS SOCIETY, TOKYO, JP, vol. E86-B, no. 9, 1 September 2003 (2003-09-01), pages 2753-2763, XP002356859 ISSN: 0916-8516
- ZHOU SU ET AL: "Perfort-nance improvement of graceful image caching by using request frequency based prefetching algorithms" TENCON 2001. PROCEEDINGS OF IEEE REGION 10 INTERNATIONAL CONFERENCE ON ELCTRICAL AND ELECTRONIC TECHNOLOGY. SINGAPORE, AUG. 19 - 22, 2001; [IEEE REGION 10 ANNUAL CONFERENCE], NEW YORK , NY : IEEE, US, vol. 1, 19 August 2001 (2001-08-19), pages 370-376, XP010556269 ISBN: 978-0-7803-7101-9

## Description

### Technical Field of the Invention

Implementations described herein relate generally to media usage and storage at network devices and, more particularly, may relate to the use of dynamic media proxies at network devices for presenting media to users of the devices.

### Background

Many devices, such as, for example, cellular radiotelephones, laptops, and personal digital assistants (PDAs), have increasingly been used for storing and viewing media content (e.g., images, audio, video). For example, many cellular radiotelephones now include a camera that permits the user to take high resolution pictures with the camera. The pictures may be stored in the telephone and possibly be sent to friends or family. Many radiotelephone users increasingly use their telephone as their primary camera, making their phone their number one device for re-living and sharing memories. As such a container of precious moments, it may be useful if the phone could store all the photos it has ever taken. However, radiotelephones typically are limited in the amount of available memory that they have for storing photos or other media.

Typically, with devices such as cellular radiotelephones having built in cameras, users regularly have to empty the telephone of pictures by connecting it to their personal computer and transferring the pictures. While some users may be advanced enough to know how to keep the most important photos on their phone even after emptying it to their personal computer, this process is typically very cumbersome and requires that they know which photos they likely want to see in the future. This problem grows as camera megapixel capacity increases, affecting more than just the memory storage demands of the telephone. For example, the processing power needed to decode these locally stored photos increases, and with it the demands on the battery needed to browse a photo album. On the other hand, the viewing experience on the phone remains pretty much the same - it doesn't matter if you have a 1 megapixel or 5 megapixel source photo when viewing it on a QVGA or VGA telephone screen. Users are, thus, lugging around, in their telephones, huge amounts of data that aren't being put to use unless they print their photos or zoom into them on the telephone screen.

### SUMMARY

According to one aspect, a method may include obtaining an item of digital media having a first quantity of data, where the item of digital media may include one of image, video or audio media; storing the item of digital media in a first memory; decreasing the item of digital media to a second quantity of data to produce a first media proxy based on a first amount of time that has elapsed since the item of digital media was stored in the first memory, where the second quantity may be less than the first quantity; and storing the first media proxy in the first memory.

Additionally, decreasing the item of digital media to a second quantity of data to produce a first media proxy may further be based on usage patterns associated with the item of digital media.

Additionally, the usage patterns may include comprise at least one of: a) a number of times the item of digital media has been viewed by a user; b) a number of times the item of digital media has been sent by the user to another user or device; or c) whether the user has associated specific tags with the item of digital media.

Additionally, decreasing the item of digital media to a second quantity of data to produce a first media proxy is further based on at least one of: a) a content of the item of digital media; b) a number of times that the item of digital media has been used as wallpaper at a device; c) to whom the item of digital media has been sent; or d) a number of times that the item of digital media has been used as a screen saver at the device.

Additionally, obtaining the item of digital media may include taking a picture using a digital camera.

Additionally, the digital camera may be a component of a mobile radiotelephone.

Additionally, the method may further include sending the item of digital media having the first quantity of data across a network to a remote server for storage in the remote server.

Additionally, the method may further include storing the item of digital media having the first quantity of data in a second memory associated with the remote server.

Additionally, storing the item of digital media in the first memory may include associating metadata with the item of digital media and storing the metadata in the first memory along with the item of digital media.

Additionally, the metadata may include a link to the item of digital media having the first quantity of data stored at the remote server.

Additionally, the method may further include downloading the item of digital media having the first quantity of data from the remote server using the link.

Additionally, the item of digital media may include an image and decreasing the item of digital media to a second quantity of data may include reducing a resolution of the image to produce the first media proxy.

Additionally, the item of digital media may include video or audio media encoded at a first bit rate and decreasing the item of digital media to a second quantity of data may include encoding the video or audio media at a second bit rate, where the second bit rate is less than the first bit rate.

Additionally, the item of digital media may include video or audio media and decreasing the item of digital media to a second quantity of data may include cropping the video or audio media in time.

Additionally, the video or audio media may be cropped in time to retain the most interesting and/or significant parts of the video or audio media.

Additionally, the method may further include decreasing the item of digital media to a third quantity of data to produce a second media proxy based on a second amount of time that has elapsed since the first media proxy was stored in the memory, where the third quantity of data is less than the second quantity; and storing the second media proxy in the first memory.

According to a further aspect, a device may include means for obtaining an item of digital media having a first quantity of data, where the item of digital media may include one of image, video or audio media; means for decreasing the item of digital media to a second quantity of data to produce a first media proxy based on an amount of time that has elapsed since the item of digital media was obtained, where the second quantity may be less then the first quantity; means for sending the item of digital media having the first quantity of data to a remote server that may be located across a network from the device for storage; and means for storing the first media proxy in a local memory at the device.

According to an additional aspect, a device may include a camera to generate a digital image having a first resolution and a processing unit to decrease a resolution of the digital image to a second resolution, to produce a first image proxy, based on a first amount of time that has elapsed since the digital image was generated by the camera, where the second resolution may be less than the first resolution. The device may further include a memory to store the first media proxy; and a transceiver to transmit the digital image having the first resolution to a media server via a wireless link prior to producing the first image proxy.

Additionally, the device may include a cellular radiotelephone.

Additionally, the first resolution may include approximately 5 megapixels.

Additionally, the second resolution may include approximately 0.5 megapixels.

Additionally, the processing unit may be further configured to decrease a resolution of the digital image to a third resolution, to produce a third image proxy, based on a second amount of time that has elapsed since the digital image was generated by the camera, where the third resolution may be less than the second resolution.

Additionally, the third resolution may include approximately 0.1 megapixels.

According to another aspect, a computer-readable medium containing instructions executable by at least one processor may include one or more instructions for obtaining, at a wireless device, items of digital media each having a first quantity of data, where the items of digital media comprise one of image, video or audio media. The computer-readable medium may further include one or more instructions for initiating sending of the items of digital media each having the first quantity of data across a network, via a wireless link, to a remote server for storage; one or more instructions for decreasing the items of digital media to each having a second quantity of data to produce media proxies, where the second quantity is less than the first quantity; and one or more instructions for storing the media proxies in a local memory at the wireless device along with links to the items of digital media stored at the remote server.

According to yet another aspect, a method may include obtaining, at a mobile wireless device, items of digital media, where the items of digital media comprise one or more of image, video or audio media; storing first ones of the items of digital media in a local memory at the wireless device to fill the local memory; sending second ones of the items of digital media, when the local memory is sufficiently full, across a network to a remote server for storage; and storing links associated with the second ones of the items of digital media in the local memory at the mobile wireless device.

The term "comprises/comprising" when used in this specification is taken to specify the presence of stated features, integers, steps, components or groups but does not preclude the presence or addition of one or more other features, integers, steps, components or groups thereof.

### BRIEF DESCRIPTION OF THE DRAWINGS

The accompanying drawings, which are incorporated in and constitute a part of this specification, illustrate one or more embodiments of the invention and, together with the description, explain the invention. In the drawings,
FIG. 1 illustrates an overview of an exemplary embodiment;
FIG. 2 illustrates an exemplary network in which exemplary embodiments described herein may be implemented;
FIG. 3 illustrates a configuration of a device that may store media consistent with an exemplary embodiment;
FIG. 4 illustrates an exemplary configuration of a cellular radiotelephone consistent with an exemplary embodiment;
FIG. 5 illustrates exemplary components of the media server of FIG. 2;
FIG. 6 is a flowchart of an exemplary process for downscaling digital media to generate dynamic media proxies consistent with an exemplary embodiment;
FIG. 7 illustrates an example of image down scaling;
FIG. 8 illustrates an original high resolution image being sent from a cellular radiotelephone to a media server for storage;
FIG. 9 illustrates exemplary media albums stored at the media server of FIG. 2;
FIG. 10 is a flowchart of an exemplary process for accessing original high resolution images at a device; and
FIG. 11 illustrates the downloading of an original high resolution image stored at the media server using metadata associated with an image proxy stored at a device.

### DESCRIPTION OF EMBODIMENTS

The following detailed description of the invention refers to the accompanying drawings. The same reference numbers in different drawings may identify the same or similar elements. Also, the following detailed description does not limit the invention.

Exemplary embodiments may generate proxies of items of media (e.g., images, audio or video media) based on time and usage patterns associated with those items of media. The media proxies may represent down scaled versions of the original items of media that may require the use of less memory when storing the proxies at a device, such as, for example, a cellular radiotelephone. The media proxies may be locally stored at the device, and the original version of the item of media may be sent to a media server across a network for storage and future retrieval. The proxies may be progressively downscaled over time based on a number of factors (further described below). Thus, an original image that initially includes approximately 2+ megapixels may be downscaled after a period of time to a proxy image having approximately 0.5 megapixels. The 0.5 megapixel proxy image may subsequently, after an additional period of time, be down scaled to a proxy image having approximately 0.01 megapixels. Down scaling of media at a device, such as a cellular radiotelephone, frees up memory for storing additional items of media. Down scaling media additionally may increase device performance by prolonging battery life (i.e., by decreasing memory accesses) and possibly increasing the speed at which media is decoded (i.e., down scaled images may be decoded quicker than original high resolution versions of the images).

### OVERVIEW

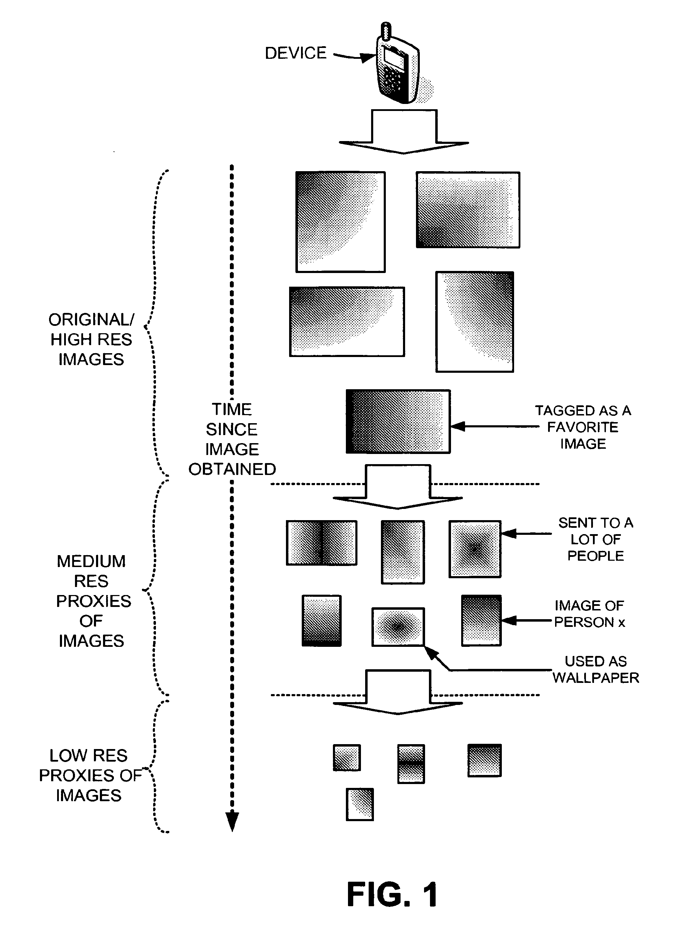

FIG. 1 illustrates an exemplary overview of dynamic media proxies that are based on time and usage patterns. As shown in FIG. 1, one or more high resolution images may be obtained at a device (e.g., a wireless device such as a cellular radiotelephone). The high resolution images may be obtained from a digital camera resident in the device (e.g., a digital camera in a cellular radiotelephone) or may be obtained from another device or server via a network (e.g., obtained while browsing the Internet). After obtaining the high resolution images, the user of the device may use the images in various ways, or may associate data with the images. For example, the user may "tag" a given image as being one the user's favorites. As another example, the user may send a given image to a number of other people (e.g., send in an email). As a further example, the user may use a given image as wallpaper on their device. As an additional example, the user may associate a person's name with a given image (e.g., a photo of the person).

Over time, as shown in FIG. 1, the original high resolution images obtained at the device may be down scaled to lower resolution images. For example, as depicted in FIG. 1, the original high resolution images (e.g., 2+ mega pixel) may be selectively down scaled to medium resolution (e.g., 0.5 mega pixel) proxies of the images. Subsequently, with the passage of additional time, the medium resolution proxies of the images may be selectively down scaled to low resolution (e.g., 0.1 to 0.01 mega pixel) proxies of the images. Certain ones of the high resolution images may not be down scaled, or may only be down scaled a limited amount. For example, images that have been tagged as "favorites" by the user, have been sent to a lot of people, have been used as wallpaper, or include a photo of a certain person, may not be down scaled, or may be down scaled a limited amount, regardless of how much time has elapsed since the images have been obtained at the device.

Downscaling images at the device decreases the memory storage requirements of images stored at the wireless device, thus, freeing up memory for future images. The original high resolution images of images that have been downscaled may be sent to an external server for storage and future retrieval, as further described below.

FIG. 1 has been described with respect to only digital images. However, as further described below, embodiments described here may equivalently be applied to other types of media, such as, for example, audio or video media.

### EXEMPLARY NETWORK

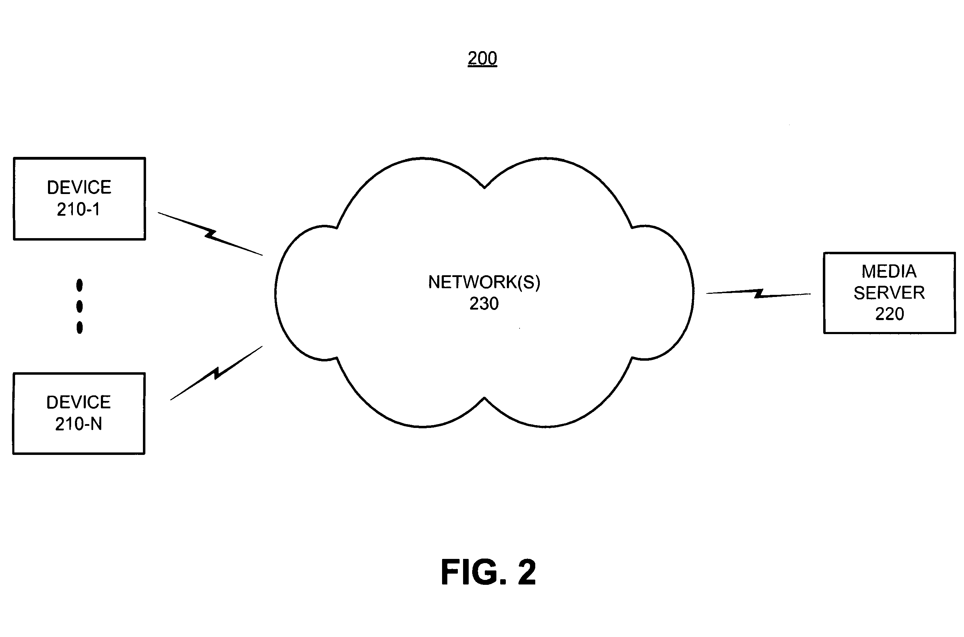

FIG. 2 illustrates a network 200 according to an exemplary embodiment. Network 200 may include multiple devices 210-1 through 210-N (referred to generically below as "device 210") and a media server 220 connected to one or more sub-networks 230. Devices 210-1 through 210-N and media server 220 may connect to the one or more sub-networks 230 via wired or wireless links.

Devices 210-1 through 210-N may include cellular radiotelephones, personal digital assistants (PDAs), Personal Communications Systems (PCS) terminals, laptop computers, palmtop computers, or any other type of appliance that includes a communication transceiver that permits the device to communicate with other devices and/or servers via sub-networks 230. Media server 220 may store media (e.g., image media, audio media or video media) received from devices 210-1 through 210-N.

Sub-network(s) 225 may include one or more networks of any type, including a local area network (LAN); a wide area network (WAN); a metropolitan area network (MAN); a telephone network, such as the Public Switched Telephone Network (PSTN) or a Public Land Mobile Network (PLMN); an intranet, the Internet; or a combination of networks. The PLMN(s) may further include a packet-switched sub-network, such as, for example, General Packet Radio Service (GPRS), Cellular Digital Packet Data (CDPD), or Mobile IP sub-network. The PLMN(s) may use a high-speed downlink packet access (HSDPA) protocol that permits higher mobile network data transfer speeds.

### EXEMPLARY DEVICE

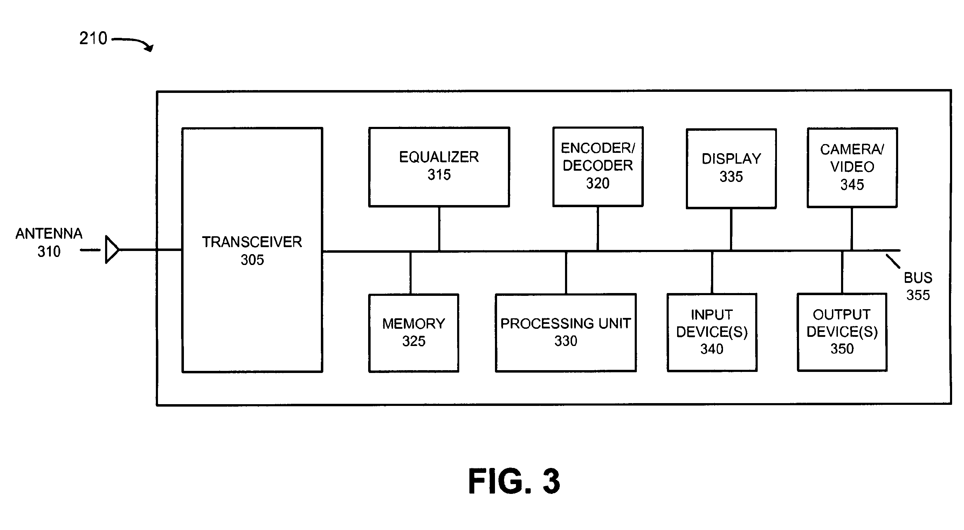

FIG. 3 illustrates an exemplary embodiment in which device 210 includes a radio transceiver. Device 210 may include a transceiver 305, an antenna 310, an equalizer 315, a encoder/decoder 320, a memory 325, a processing unit 330, a display unit 335, an input device(s) 340, a camera/video unit 345, an output device(s) 350, and a bus 355.

Transceiver 305 may include transceiver circuitry for transmitting and/or receiving symbol sequences using radio frequency signals via antenna 310. Transceiver 305 may include, for example, a RAKE receiver. Transceiver 305 may further include mechanisms for estimating the signal-to-interference ratio (SIR) of received symbol sequences. Transceiver 305 may additionally include mechanisms for estimating the propagation channel Doppler frequency.

Equalizer 315 may store and implement Viterbi trellises for estimating received symbol sequences using, for example, a maximum likelihood sequence estimation technique. Equalizer 315 may additionally include mechanisms for performing channel estimation. Encoder/decoder 320 may include circuitry for decoding and/or encoding received or transmitted symbol sequences.

Memory 325 provides permanent, semi-permanent, or temporary working storage of data and instructions for use by processing unit 330 in performing processing functions, and for storing data, such as, for example, media data (e.g., images, audio media, or video media). Memory 325 may include read only memory (ROM), random access memory (RAM), large-capacity storage devices, such as a magnetic and/or optical recording medium and its corresponding drive, or other types of memory devices.

Processor 330 may include a processor, microprocessor, or processing logic that may interpret and execute instructions. Processing unit 330 may perform all data processing functions for inputting, outputting, and processing of data including data buffering and control functions, such as call processing control, user interface control, or the like. Processing unit 330 may additionally perform media down scaling to produce media proxies (as described further below).

Display unit 335 may include a screen display that may display images and/or video, and may also provide a graphical user interface that can be used by a user for selecting device 210 functions. The screen display of display unit 335 may include any type of visual display, such as, for example, an LCD display, a plasma screen display, an LED display, a CRT display, an OLED display, etc.

Input device(s) 340 may include mechanisms for entry of data into device 210. For example, input device(s) 340 may include a key pad (not shown) and a microphone (not shown). The microphone can include mechanisms for converting auditory input into electrical signals. Camera/video unit 345 may include camera and/or video devices for obtaining and storing images and/or video. Output device(s) 350 may include mechanisms for outputting data in audio and/or hard copy format. For example, output device(s) 350 may include a speaker (not shown) that includes mechanisms for converting electrical signals into auditory output. Bus 355 interconnects the various components of device 210 to permit the components to communicate with one another.

The configuration of components of device 210 illustrated in FIG. 3 is for illustrative purposes only. Other configurations with more, fewer, or a different arrangement of components may be implemented. For example, in one embodiment, equalizer 315 and encoder/decoder 320 may be omitted.

Device 210, consistent with exemplary implementations, may perform certain processes, as described below. Device 210 may perform these processes in response to processing unit 330 executing software instructions contained in a computer-readable medium, such as memory 325. A computer-readable medium may include a physical or logical memory device.

The software instructions may be read into memory 325 from another computer-readable medium, or from another device via communication interface transceiver 305. The software instructions contained in memory 325 may cause processing unit 330 to perform processes that will be described later. Alternatively, hardwired circuitry may be used in place of or in combination with software instructions to implement processes consistent with exemplary implementations. Thus, implementations are not limited to any specific combination of hardware circuitry and software.

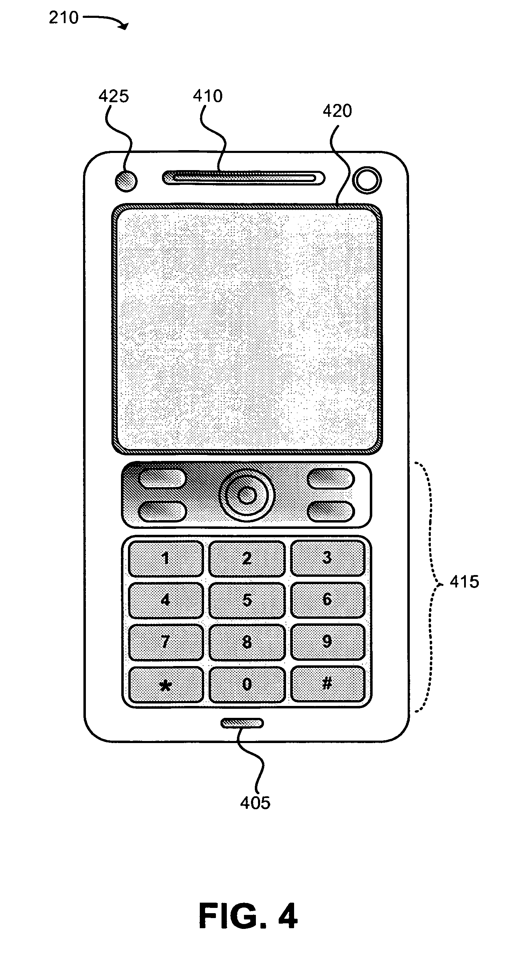

FIG. 4 illustrates one exemplary implementation of device 210 in which device 210 is a cellular radiotelephone. As shown in FIG. 4, the cellular radiotelephone may include a microphone 405 (e.g., of input device(s) 340), a speaker 410 (e.g., of output device(s) 350), a keypad 415 (e.g., of input device(s) 340), a display 420 (e.g., of display unit 335), and a camera 425 (e.g., of camera/video unit 345). The user of the cellular radiotelephone may use camera 425 to take pictures that can be displayed on display 420 and stored in memory 325. The user may use key pad 415 to take pictures using camera 425.

### EXEMPLARY MEDIA SERVER ARCHITECTURE

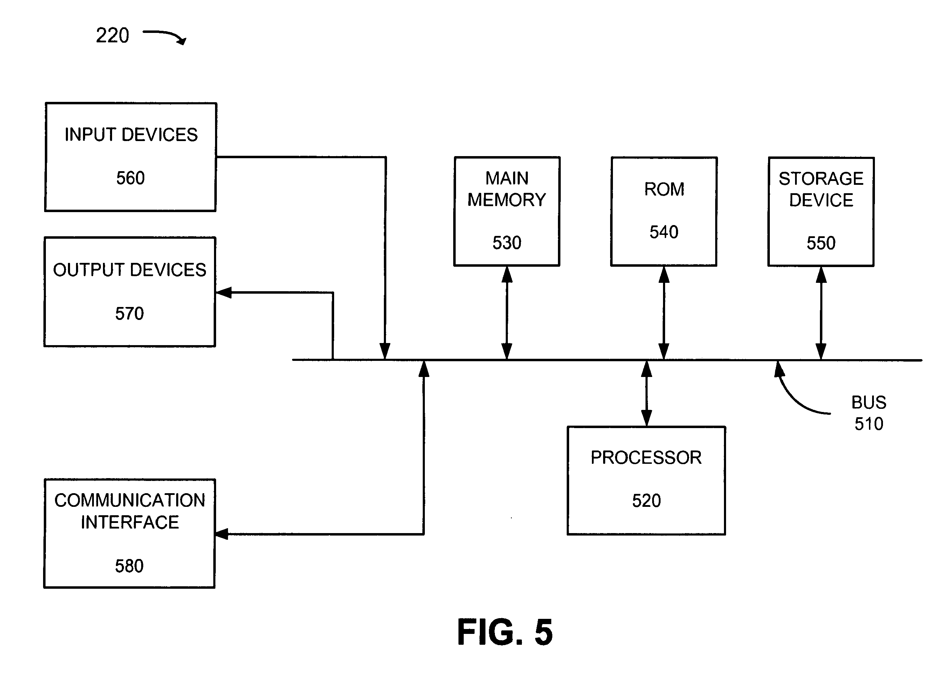

FIG. 5 is an exemplary diagram of an architecture of media server 220. Media server 220 may include a bus 510, a processor 520, a main memory 530, a read only memory (ROM) 540, a storage device 550, an input device 560, an output device 570, and a communication interface 580. Bus 510 may include a path that permits communication among the elements of media server 220.

Processor 520 may include a processor, microprocessor, or processing logic that may interpret and execute instructions. Main memory 530 may include a random access memory (RAM) or another type of dynamic storage device that may store information and instructions for execution by processor 520. ROM 540 may include a ROM device or another type of static storage device that may store static information and instructions for use by processor 520. Storage device 550 may include a magnetic and/or optical recording medium and its corresponding drive.

Input device 560 may include a mechanism that permits an operator to input information to media server 220, such as a keyboard, a mouse, a pen, a touch screen, voice recognition and/or biometric mechanisms, etc. Output device 570 may include a mechanism that outputs information to the operator, including a display, a printer, a speaker, etc. Communication interface 580 may include any transceiver-like mechanism that enables media server 220 to communicate with other devices and/or systems. For example, communication interface 580 may include mechanisms for communicating with another device or system via a network, such as sub-network 230.

Media server 220, consistent with exemplary implementations, may perform certain processes, as described below. Media server 220 may perform these processes in response to processor 520 executing software instructions contained in a computer-readable medium, such as memory 530. A computer-readable medium may include a physical or logical memory device.

The software instructions may be read into memory 530 from another computer-readable medium, such as data storage device 550, or from another device via communication interface 580. The software instructions contained in memory 530 may cause processor 520 to perform processes that will be described later. Alternatively, hardwired circuitry may be used in place of or in combination with software instructions to implement processes consistent with exemplary implementations. Thus, implementations are not limited to any specific combination of hardware circuitry and software.

### EXEMPLARY MEDIA DOWN SCALING PROCESS

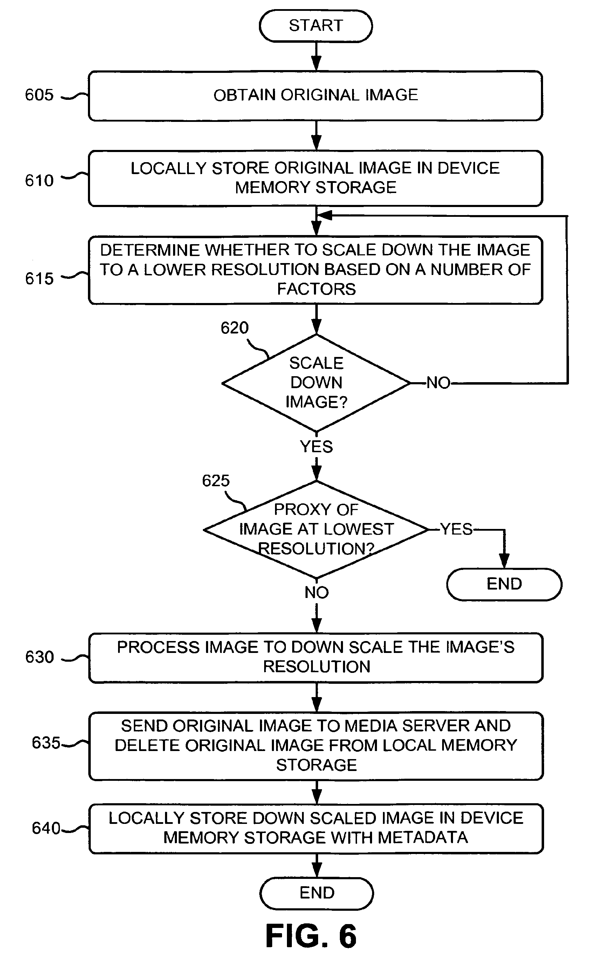

FIG. 6 is a flowchart of a process for down scaling media stored in device 210 according to an exemplary embodiment. The process exemplified by FIG. 6 may be implemented by processing unit 330 of device 210. The exemplary process of FIG. 6 may be performed for each item of media (e.g., image, audio or video) obtained at device 210.

The exemplary process may begin with obtaining an original image (block 605). In one implementation, camera 425 of device 210 may generate an image (e.g., a digital photo). In another implementation, the original image may be received at device 210 via sub-network 230 (e.g., sent from another device, client, or server). For example, a user of device 210 may download the original image while browsing a website. The original image may include a high resolution image (e.g., 2+ mega pixels).

The original image may be locally stored in device 210's memory storage (block 610). For example, the original image may be stored in memory 325 of device 210. Processing unit 330 may determine whether to scale down the image to a lower resolution based on a number of factors (block 615). In one embodiment, a factor in determining whether to scale down the image to a lower resolution may be the amount of time that has elapsed since the image was obtained in device 210 (e.g., image retrieved from a website, or picture taken by camera 425) and stored in local memory. Thus, older images may be more likely to be down scaled to a lower resolution than newer images. Other factors that may be used to determine whether a given image should be down scaled may include one or more of the following:
1) a number of times a given image has been viewed at device 210,
2) a number of times a given image has been sent by the user at device 210 to another user or device (e.g., number of times the image has been emailed to another user),
3) a content of the image (e.g., who/what is in the image),
4) a number of times that the image has been used as wallpaper at device 210,
5) to whom the image has been sent,
6) a number of times that the image has been used as a screen saver at device 210,
7) a number of times that the image has been used as a contact photo (i.e., photo is associated with a contact's phone number such that when the contact is called, the photo is displayed), and/or
8) whether the image has specific tags associated with it (e.g., tagged as a favorite).
Other factors, than those specifically described above, may be used to determine whether a given image may be down scaled. For example, the addition of an upgraded memory stick to device 210 may permit more images to be stored at device 210 in their original resolution, thus, reducing the need to downscale previously stored images. As another example, an image that has been viewed several times by the user and has been sent to other family members may not be downscaled, but may be stored at device 210 at its original resolution. As an additional example, an image that has been sent to other users several times may not be downscaled, but may be stored at device 210 at its original resolution.

If the image is not to be scaled down (block 620-NO), then the exemplary process may return to block 615 after, for example, the elapse of a span of time. For example, the exemplary process may return to block 615 at certain points in time (e.g., device 210 has been inactive for a specified period of time, or at periodic intervals (e.g., once a day)). As an example, the exemplary process may return to block 615 when device 210 is connected to a power source and device 210's battery is fully charged.

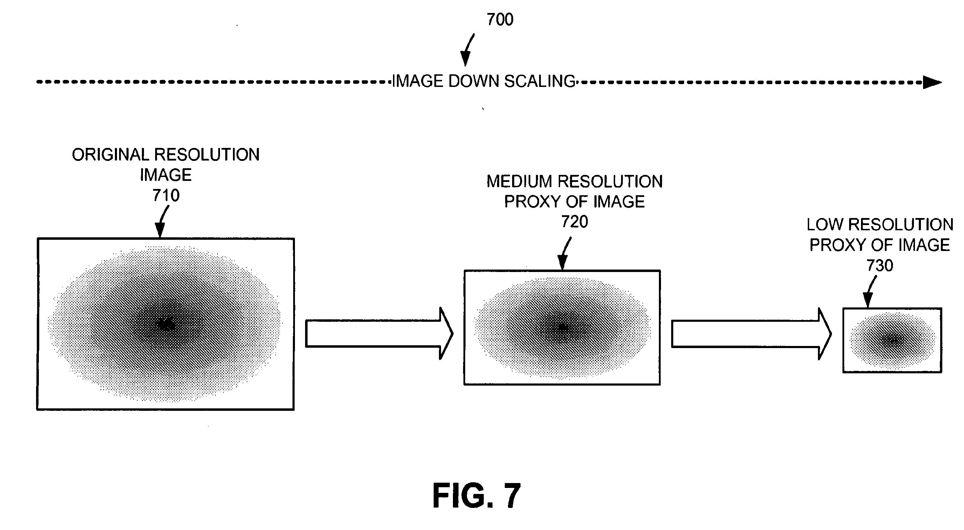

If the image is to be scaled down (block 620-YES), then a determination may be made whether a current proxy of the original image is at a lowest resolution (block 625). A lowest resolution for an image may be device dependent may be approximately 0.1 to 0.01 megapixels. If a current proxy of the original image is at its lowest resolution (block 625-YES), then the exemplary process may end. If no proxy of the original image has yet been generated, or the current proxy of the original image is not at the lowest resolution (block 625-NO), then the original image or current proxy image may be processed to down scale it and decrease its resolution (block 630). FIG. 7 depicts image down scaling 700 according to an exemplary embodiment. During image down scaling 700, an original resolution image 710 having, for example, 2+ megapixels may be processed to down scale to a medium resolution proxy 720 of the image. The medium resolution proxy 720 may have, for example, approximately 0.5 megapixels. During further image down scaling 700, the medium resolution proxy image 720 may be processed to down scale to a low resolution proxy 730 of the image. The low resolution image proxy 730 may have, for example, approximately 0.01 megapixels.

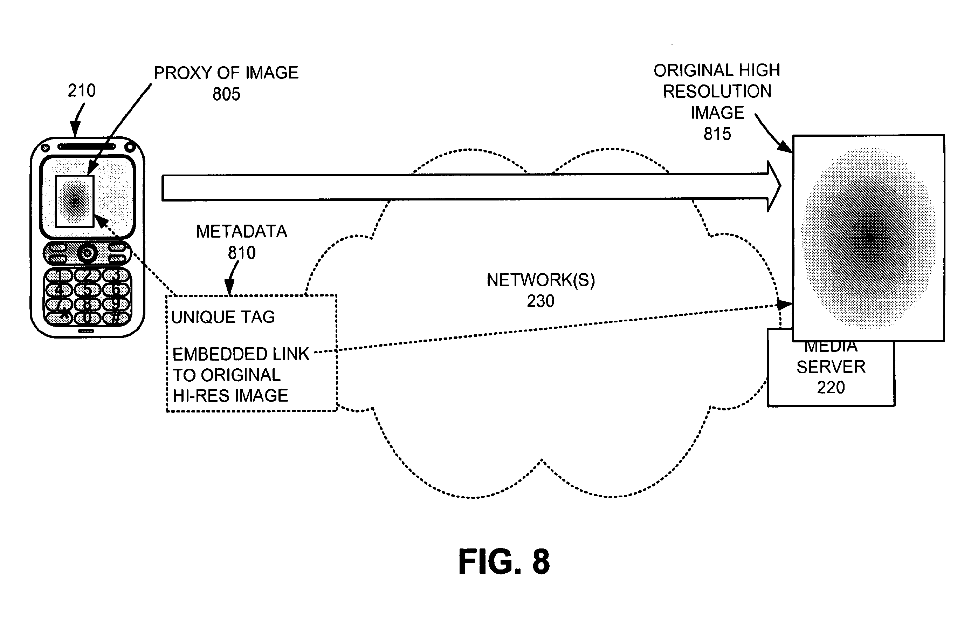

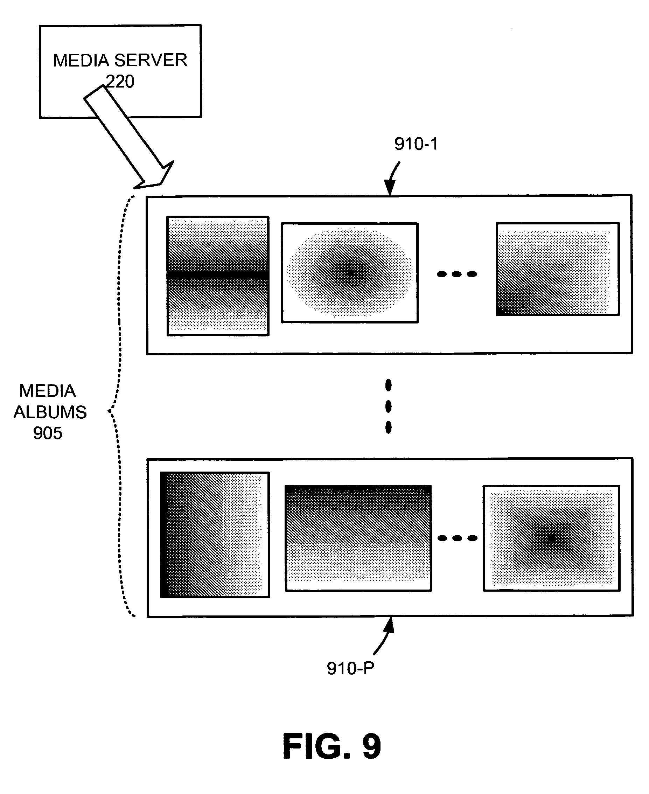

The original image may be sent to media server 220, and the original image may then be deleted from device 210's local memory storage (block 640). As shown in FIG. 8, device 210 may send the original high resolution image 815 across sub-network(s) 230 to media server 220 for storage. Device 210 may then delete the original image from local memory (e.g., memory 325). As further shown in FIG. 9, media server 220 may store each received image in media albums 905, which may include individual media albums 910-1 through 910-P. Each of media albums 910-1 through 910-P may include one or more items of digital media, including digital images, audio media, or video media received from a given user. For example, media album 910-1 may store all media items received from user 1, media album 910-P may store all media albums received from user P, etc.

The down scaled image proxy may be stored in device 210's memory storage along with associated metadata (block 635). As shown in FIG. 8, metadata 810 may be generated for association with each image proxy 805. Metadata 810 may include, for example, a tag that uniquely identifies the image and an embedded link to the original high resolution image stored at media server 220. The link may subsequently be used to retrieve image 815 from media server 220. In one implementation, metadata 810 may be data included in an exchangeable image file (EXIF) associated with a given image. EXIF is a standard file format used in digital photography.

The exemplary process of FIG. 6 has been described with respect to down scaling digital images. The exemplary process of FIG. 6, however, may equivalently be used to down scale other types of media, such as, for example, audio or video media. To "down scale" audio or video media, the audio or video media may be encoded using lower and lower bit rates relative to the original. Thus, a first media proxy of an item of audio or video media may be encoded using a lower bit rate than the original version of the item of audio or video media, a second media proxy of an item of audio or video media may be encoded using a lower bit rate than used to encode the first media proxy, etc. Alternatively, or in conjunction with encoding using a lower bit rate, audio and video media may be cropped in time to "down scale" them. In one implementation, the audio or video media may be cropped in time to find the most interesting/significant parts of the media (e.g., using Sony CSL technology). Thus, a proxy of an item of audio or video media may include a portion of the original media cropped in time. "Down scaling" as referred to herein may, thus, refer to a form of lossy compression that may be applied to different image, audio or video media.

### EXEMPLARY MEDIA ACCESS PROCESS

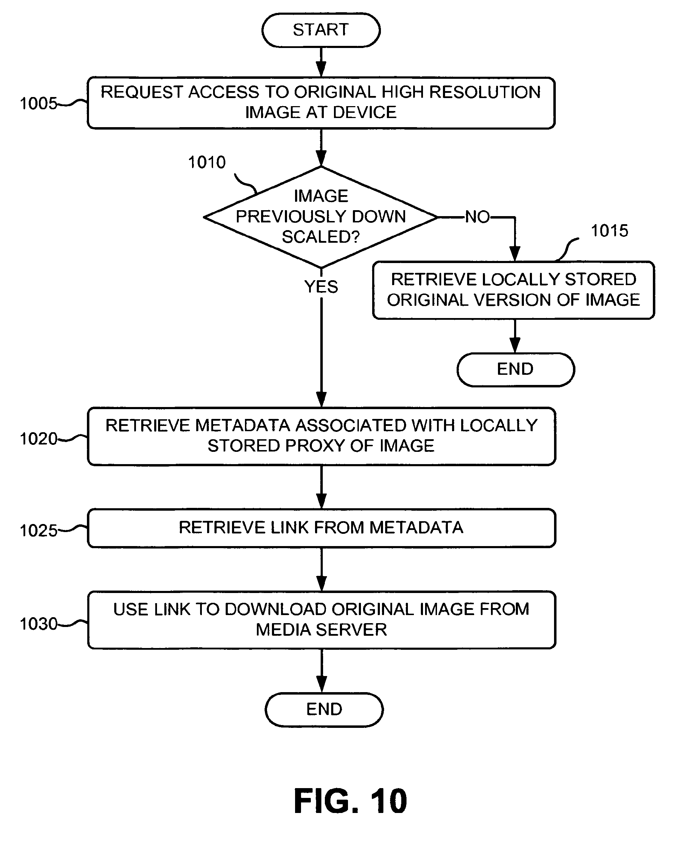

FIG. 10 is a flowchart of a process for accessing media at device 210 according to an exemplary embodiment. The process exemplified by FIG. 6 may be implemented by processing unit 330 of device 210.

The exemplary process may begin with a request to access an original high resolution image at device 210 (block 1005). A user of device 210 may, for example, select an image, using keypad 415 and display 420, to request access to the original high resolution image. In one implementation, the addition of an upgraded memory stick at device 210 may result in requests to access a high resolution image(s) previously stored at media server 220 so that that image(s) may now be stored in the increased memory available locally at device 210.

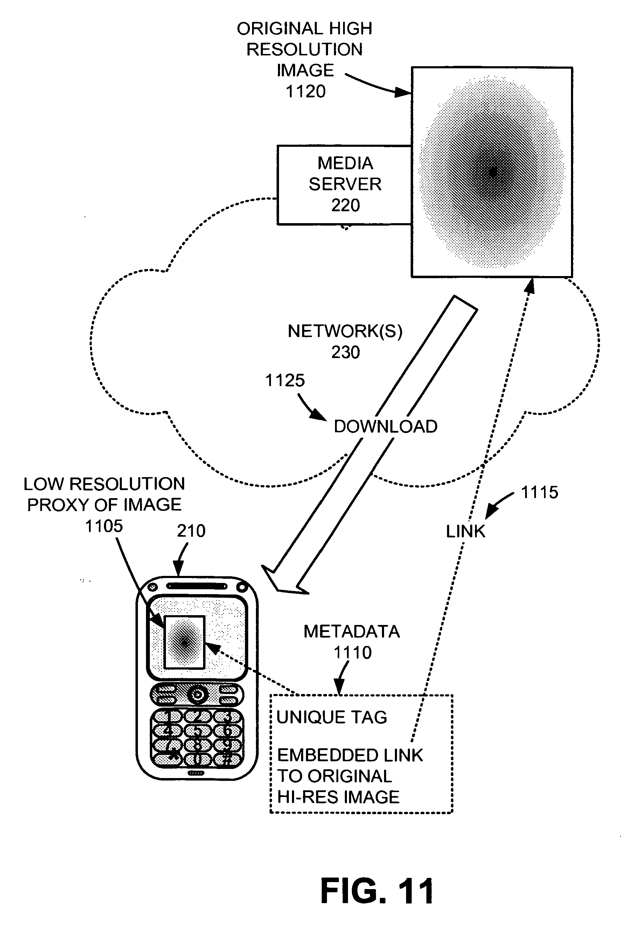

A determination may be made whether the image was previously scaled down (block 1010). If not (block 1010-NO), then the locally stored original high resolution version of the image may be retrieved from memory (block 1015). For example, if the image was not previously scaled down, then the image may be retrieved from memory 325 of device 210. If the image was previously down scaled (block 1010-YES), then the metadata associated with the locally stored proxy of the image may be retrieved (block 1020). For example, as shown in FIG. 11, a low resolution proxy 1105 of an image may be selected by a user of device 210 and metadata 1110 associated with the image proxy 1105 may be retrieved from memory. Metadata 1110 may include a unique tag and an embedded link.

A link may be retrieved from the metadata (block 1025). As further shown in FIG. 11, link 1115 may be retrieved from metadata 1110. The retrieved link may be used to download the original image from media server 220 (block 1030). For example, as additionally shown in FIG. 11, device 210 may use link 1115 to download 1125 original high resolution image 1120 from media server 220 via sub-network(s) 230. The downloaded image may then, for example, be sent to other users (e.g., via email or instant messaging) from device 210 or printed at device 210. In other implementations, the link 1115 may be sent to devices associated with other users (e.g., via email or instant messaging) and link 1115 may be used by those devices to download the original high resolution image from media server 220. For example, if a user emails an image to another user, the image may automatically be sent to media server 220 and a link to the location of the image stored at media server 220 may be included in the email in place of the actual image. The client application that receives the email may automatically download the image from media server 220.

### CONCLUSION

The foregoing description of implementations provides illustration and description, but is not intended to be exhaustive or to limit the invention to the precise form disclosed. Modifications and variations are possible in light of the above teachings, or may be acquired from practice of the invention. For example, while series of blocks have been described with regard to FIGS. 6 and 10, the order of the blocks may be modified in other implementations consistent with the principles of the invention. Further, non-dependent blocks may be performed in parallel. In some implementations, a web album 910 may be accessed by a user via sub-network(s) 230 to view the various items of media stored at media server 220. Media server 220 may provide advertisements, in conjunction with the various items of media, to the user at device 210 viewing the items of media. The advertisements may be provided, for example, based on an analysis of a content of the media (e.g., image analysis, etc.).

Aspects of the invention may also be implemented in methods and/or computer program products. Accordingly, the invention may be embodied in hardware and/or in software (including firmware, resident software, microcode, etc.). Furthermore, the invention may take the form of a computer program product on a computer-usable or computer-readable storage medium having computer-usable or computer-readable program code embodied in the medium for use by or in connection with an instruction execution system. The actual software code or specialized control hardware used to implement aspects consistent with principles of the invention is not limiting of the invention. Thus, the operation and behavior of the aspects were described without reference to the specific software code - it being understood that one of ordinary skill in the art would be able to design software and control hardware to implement the aspects based on the description herein.

Furthermore, certain portions of the invention may be implemented as "logic" that performs one or more functions. This logic may include hardware, such as an application specific integrated circuit or field programmable gate array, software, or a combination of hardware and software.

Even though particular combinations of features are recited in the claims and/or disclosed in the specification, these combinations are not intended to limit the invention. In fact, many of these features may be combined in ways not specifically recited in the claims and/or disclosed in the specification.

No element, act, or instruction used in the present application should be construed as critical or essential to the invention unless explicitly described as such. Also, as used herein, the article "a" is intended to include one or more items. Where only one item is intended, the term "one" or similar language is used. Further, the phrase "based on" is intended to mean "based, at least in part, on" unless explicitly stated otherwise.

## Claims

1. A method, comprising:
obtaining (605) an item of digital media having a first quantity of data, where the item of digital media comprises one of image, video or audio media;
storing (610) the item of digital media in a first memory;
decreasing (630) the item of digital media to a second quantity of data, where the second quantity is less than the first quantity, to produce a first media proxy based on at least one of:
a) a number of times the item of digital media has been sent by a user to another user or device;
b) whether the user has associated specific tags with the item of digital media;
c) a content of the item of digital media;
d) a number of times that the item of digital media has been used as wallpaper at a device;
e) a number of times that the item of digital media has been associated with a contact's phone number;
f) to whom the item of digital media has been sent; or
g) a number of times that the item of digital media has been used as a screen
saver at a device; and
storing (640) the first media proxy in the first memory.

2. The method of claim 1, where obtaining the item of digital media comprises taking a picture using a digital camera.

3. The method of claim 1, further comprising:
sending (635) the item of digital media having the first quantity of data across a network to a remote server for storage in the remote server.

4. The method of claim 3, further comprising:
storing the item of digital media having the first quantity of data in a second memory associated with the remote server.

5. The method claim 4, where storing the item of digital media in the first memory comprises:
associating metadata with the item of digital media; and
storing the metadata in the first memory along with the item of digital media.

6. The method of claim 5, where the metadata (1110) includes a link (1115) to the item of digital media having the first quantity of data (1120) stored at the remote server (220).

7. The method of claim 6, further comprising:
downloading (1125) the item of digital media having the first quantity of data (1120) from the remote server (220) using the link (1115).

8. The method of claim 1, where the item of digital media comprises an image and where decreasing the item of digital media to a second quantity of data comprises:
reducing (700) a resolution of the image to produce the first media proxy.

9. The method of claim 1, where the item of digital media comprises video or audio media encoded at a first bit rate and where decreasing the item of digital media to a second quantity of data comprises:
encoding the video or audio media at a second bit rate, where the second bit rate is less than the first bit rate.

10. The method of claim 1, where the item of digital media comprises video or audio media and where decreasing the item of digital media to a second quantity of data comprises:
cropping the video or audio media in time.

11. The method of claim 1, further comprising:
decreasing the item of digital media to a third quantity of data to produce a second media proxy based on a second amount of time that has elapsed since the first media proxy was stored in the memory, where the third quantity of data is less than the second quantity; and
storing the second media proxy in the first memory.

12. A device, (210) comprising:
a camera (425) to generate a digital image having a first resolution;
a processing unit (330) to decrease a resolution of the digital image to a second resolution, where the second resolution is less than the first resolution, to produce a first image proxy, based on at least one of:
a) a number of times the digital image has been sent by a user to another user or device;
b) whether the user has associated specific tags with the digital image;
c) a content of the digital image;
d) a number of times that the digital image has been used as wallpaper at the device;
e) a number of times that the digital image has been associated with a contact's phone number;
f) to whom the digital image has been sent; or
g) a number of times that the digital image has been used as a screen saver at the device; and
a memory to store the first image proxy; and
a transceiver to transmit the digital image having the first resolution to a media server via a wireless link prior to producing the first image proxy.

13. The device of claim 12, where the first resolution comprises approximately 5 megapixels.

14. The device of claim 13, where the second resolution comprises approximately 0.5 megapixels.

15. The device of claim 14, where the processing unit is further configured to decrease a resolution of the digital image to a third resolution, to produce a third image proxy, based on a second amount of time that has elapsed since the digital image was generated by the camera, where the third resolution is less than the second resolution.

## Patentansprüche

1. Verfahren umfassend:
Erlangen (605) einer Einheit von digitalen Medien mit einer ersten Menge von Daten, wobei die Einheit von digitalen Medien eines von Bild-, Video- oder Audio-Medien umfasst;
Speichern (610) der Einheit von digitalen Medien in einem ersten Speicher;
Verringern (630) der Einheit digitaler Medien auf eine zweite Menge von Daten, wobei die zweite Menge kleiner ist als die erste Menge, um einen ersten Medienvertreter basierend auf mindestens einem der folgenden herzustellen:
a) eine Zahl von Malen, die die Einheit von digitalen Medien von einem Benutzer zu einem anderen Benutzer oder Gerät gesendet wurde;
b) ob der Benutzer bestimmte Kennzeichen mit der Einheit von digitalen Medien assoziiert hat;
c) einem Inhalt der Einheit von digitalen Medien;
d) eine Zahl von Malen, die die Einheit von digitalen Medien als ein Hintergrund an einem Gerät verwendet wurde;
e) eine Zahl von Malen, die die Zahl von digitalen Medien mit einer Telefonnummer eines Kontakts assoziiert wurde;
f) zu wem die Einheit von digitalen Medien gesendet wurde; oder
g) einer Zahl von Malen, die die Einheit von digitalen Medien als ein Bildschirmschoner an einem Gerät verwendet wurde; und
Speichern (640) des ersten Medienvertreters in dem ersten Speicher.

2. Verfahren nach Anspruch 1, wobei Erlangen der Einheit von digitalen Medien umfasst Aufnehmen eines Bildes unter Verwendung einer digitalen Kamera.

3. Verfahren nach Anspruch 1, ferner umfassend:
Senden (635) der Einheit von digitalen Medien mit der ersten Menge von Daten über ein Netz zu einem entfernten Server, zum Speichern in dem entfernten Server.

4. Verfahren nach Anspruch 3, ferner umfassend:
Speichern der Einheit von digitalen Medien mit der ersten Menge von Daten in einem zweiten Speicher, assoziiert mit dem entfernten Server.

5. Verfahren nach Anspruch 4, wobei das Speichern der Einheit von digitalen Medien in dem ersten Speicher umfasst:
Assoziieren von Meta-Daten mit der Einheit von digitalen Medien; und
Speichern der Meta-Daten in dem ersten Speicher zusammen mit der Einheit von digitalen Medien.

6. Verfahren nach Anspruch 5, wobei die Meta-Daten (1110) einen Link (1115) zu der Einheit von digitalen Medien mit der ersten Menge von Daten (1120), die an dem entfernten Server (220) gespeichert sind, beinhaltet.

7. Verfahren nach Anspruch 6, ferner umfassend:
Herunterladen (1125) der Einheit von digitalen Medien mit der ersten Menge von Daten (1120) von dem entfernten Server (220) unter Verwendung des Links (1115).

8. Verfahren nach Anspruch 1, wobei die Einheit von digitalen Medien ein Bild umfasst und wobei verringern der Einheit von digitalen Medien auf eine zweite Menge von Daten umfasst:
Reduzieren (700) einer Auflösung des Bilds, um den ersten Medienvertreter herzustellen.

9. Verfahren nach Anspruch 1, wobei die Einheit von digitalen Medien Video- oder Audio-Medien umfasst, die bei einer ersten Bitrate codiert sind und, wobei Verringern der Einheit von digitalen Medien auf eine zweite Menge von Daten umfasst:
Codieren der Video- oder Audiomedien bei einer zweiten Bitrate, wobei die zweite Bitrate kleiner ist als die erste Bitrate.

10. Verfahren nach Anspruch 1, wobei die Einheit von digitalen Medien Video- oder Adio-Medien umfasst und, wobei Verringern der Einheit von digitalen Medien auf eine zweite Menge von Daten umfasst:
Schneiden der Video- oder Audio-Medien in der Zeit.

11. Verfahren nach Anspruch 1, ferner umfassend:
Verringern der Einheit von digitalen Medien auf eine dritte Menge von Daten, um einen zweiten Medienvertreter herzustellen, basierend auf einem zweiten Umfang von Zeit, die abgelaufen ist, seit der erste Medienvertreter in dem Speicher gespeichert wurde, wobei die dritte Menge von Daten kleiner ist als die zweite Menge; und
Speichern des zweiten Medienvertreters in dem ersten Speicher.

12. Gerät (210), umfassend:
eine Kamera (425), um ein digitales Bild mit einer ersten Auflösung zu erzeugen;
eine Verarbeitungseinheit (330), um eine Auflösung des digitalen Bildes auf eine zweite Auflösung zu verringern, wobei die zweite Auflösung kleiner ist als die erste Auflösung, um einen ersten Bildvertreter herzustellen, basierend auf mindestens einem von:
a) einer Zahl von Malen, die das digitale Bild durch einen Benutzer zu einem anderen Benutzer oder Gerät gesendet wurde;
b) ob der Benutzer bestimmte Kennzeichen mit dem digitalen Bild assoziiert hat;
c) einem Inhalt des digitalen Bildes;
d) einer Zeit von Malen, die das digitale Bild als Hintergrund an dem Gerät verwendet wurde;
e) eine Zahl von Malen, die das digitale Bild mit einer Telefonnummer eines Kontakts assoziiert wurde;
f) zu wem das digitale Bild gesendet wurde; oder
g) einer Zahl von Malen, die das digitale Bild als Bildschirmschoner an einem Gerät verwendet wurde; und
einen Speicher zum Speichern des ersten Bildvertreters; und
einen Sendeempfänger, um das digitale Bild mit der ersten Auflösung zu einem Medienserver über eine Drahtlos-Verbindung vor einer Herstellung des ersten Bildvertreters zu übertragen.

13. Gerät nach Anspruch 12, wobei die erste Auflösung etwa 5 Megapixel umfasst.

14. Gerät nach Anspruch 13, wobei die zweite Auflösung etwa 0,5 Megapixel umfasst.

15. Gerät nach Anspruch 14, wobei die Verarbeitungseinheit ferner konfiguriert ist, um eine Auflösung des Digitalbildes auf eine dritte Auflösung zu verringern, um einen dritten Bildvertreter herzustellen, basierend auf einem zweiten Umfang von Zeit, welche abgelaufen ist, seit das digitale Bild durch die Kamera erzeugt wurde, wobei die dritte Auflösung geringer ist als die zweite Auflösung.

## Revendications

1. Procédé comprenant les étapes consistant à :
obtenir (605) un élément multimédia numérique comportant une première quantité de données, l'élément multimédia numérique étant constitué d'une image ou d'un multimédia vidéo ou audio ;
stocker (610) l'élément multimédia numérique dans une première mémoire ;
réduire (630) l'élément multimédia numérique à une deuxième quantité de données, la deuxième quantité étant inférieure à la première quantité, afin de produire un premier mandataire multimédia, en fonction d'au moins l'un des facteurs suivantes :
a) nombre de fois où l'élément multimédia numérique a été envoyé par un utilisateur à un autre utilisateur ou dispositif ;
b) association de balises spécifiques à l'élément multimédia numérique par l'utilisateur ;
c) contenu de l'élément multimédia numérique ;
d) nombre de fois où l'élément multimédia numérique a été utilisé comme fond d'écran sur un dispositif ;
e) nombre de fois où l'élément multimédia numérique a été associé au numéro de téléphone d'un contact ;
f) destinataires de l'envoi de l'élément multimédia numérique ; ou
g) nombre de fois où l'élément multimédia numérique a été utilisé comme économiseur d'écran sur un dispositif ; et
stocker (640) le premier mandataire multimédia dans la première mémoire.

2. Procédé selon la revendication 1, dans lequel l'étape d'obtention de l'élément multimédia numérique comprend l'étape consistant à prendre une image à l'aide d'un appareil numérique de prise de vues.

3. Procédé selon la revendication 1, comprenant en outre l'étape consistant à :
envoyer (635) l'élément multimédia numérique comportant la première quantité de données via un réseau vers un serveur distant, en vue du stockage sur le serveur distant.

4. Procédé selon la revendication 3, comprenant en outre l'étape consistant à :
stocker l'élément multimédia numérique comportant la première quantité de données dans une deuxième mémoire associée au serveur distant.

5. Procédé selon la revendication 4, dans lequel l'étape de stockage de l'élément multimédia numérique dans la première mémoire comprend les étapes consistant à :
associer des métadonnées à l'élément multimédia numérique ; et
stocker les métadonnées dans la première mémoire avec l'élément multimédia numérique.

6. Procédé selon la revendication 5, dans lequel les métadonnées (1110) comprennent un lien (1115) vers l'élément multimédia numérique comportant la première quantité de données (1120) stocké sur le serveur distant (220).

7. Procédé selon la revendication 6, comprenant en outre l'étape consistant à :
télécharger (1125) à partir du serveur distant (220) l'élément multimédia numérique comportant la première quantité de données (1120), en utilisant le lien (1115).

8. Procédé selon la revendication 1, dans lequel l'élément multimédia numérique est constitué d'une image et dans lequel l'étape de réduction de l'élément multimédia numérique à une deuxième quantité de données comprend l'étape consistant à :
réduire (700) une résolution de l'image afin de produire le premier mandataire multimédia.

9. Procédé selon la revendication 1, dans lequel l'élément multimédia numérique est constitué d'un multimédia vidéo ou audio codé avec un premier débit de bits et dans lequel l'étape de réduction de l'élément multimédia numérique à une deuxième quantité de données comprend l'étape consistant à :
coder le multimédia vidéo ou audio avec un deuxième débit de bits, le deuxième débit de bits étant inférieur au premier débit de bits.

10. Procédé selon la revendication 1, dans lequel l'élément multimédia numérique est constitué d'un multimédia vidéo ou audio codé avec un premier débit de bits et dans lequel l'étape de réduction de l'élément multimédia numérique à une deuxième quantité de données comprend l'étape consistant à :
réduire la durée du multimédia vidéo ou audio.

11. Procédé selon la revendication 1, comprenant en outre les étapes consistant à :
réduire l'élément multimédia numérique à une troisième quantité de données afin de produire un deuxième mandataire multimédia en fonction d'une deuxième période de temps écoulée depuis que le premier mandataire multimédia a été stocké dans la mémoire, la troisième quantité de données étant inférieure à la deuxième quantité de données ; et
stocker le deuxième mandataire multimédia dans la première mémoire.

12. Dispositif (210), comprenant :
un appareil de prise de vues (425), destiné à produire une image numérique ayant une première résolution ;
une unité de traitement (330), destinée à ramener une résolution de l'image numérique à une deuxième résolution, la deuxième résolution étant inférieure à la première résolution, afin de produire un premier mandataire d'image, en fonction d'au moins un des facteurs suivantes :
a) nombre de fois où l'image numérique a été envoyée par un utilisateur à un autre utilisateur ou dispositif ;
b) association de balises spécifiques à l'image numérique par l'utilisateur ;
c) contenu de l'image numérique ;
d) nombre de fois où l'image numérique a été utilisée comme fond d'écran sur un dispositif ;
e) nombre de fois où l'image numérique a été associée au numéro de téléphone d'un contact ;
f) destinataires de l'envoi de l'image numérique ; ou
g) nombre de fois où l'image numérique a été utilisée comme économiseur d'écran sur un dispositif ; et
une mémoire, destinée à stocker le premier mandataire d'image ; et
un émetteur-récepteur, destiné à émettre l'image numérique ayant la première résolution vers un serveur de multimédias, via une liaison sans fil, avant de produire le premier mandataire d'image.

13. Dispositif selon la revendication 12, dans lequel la première résolution comporte approximativement 5 mégapixels.

14. Dispositif selon la revendication 13, dans lequel la deuxième résolution comporte approximativement 0,5 mégapixel.

15. Dispositif selon la revendication 14, dans lequel l'unité de traitement est en outre configurée pour réduire la résolution de l'image numérique à une troisième résolution, afin de produire un troisième mandataire d'image, en fonction d'une deuxième quantité de temps qui s'est écoulée depuis que l'image numérique a été produite par l'appareil de prise de vues, la troisième résolution étant inférieure à la deuxième résolution.
